# FASCICULE DE BREVET EUROPEEN

(11) **EP 3 720 771 B1**
(45) Date de publication et mention de la délivrance du brevet: **08.12.2021**
(21) Numéro de dépôt: 19703775.7
(22) Date de dépôt: 11.01.2019
(51) Int. Cl.: B64G 1/64, B64G 1/00

(54) **PROCÉDÉ D'ÉJECTION D'UNE CHARGE UTILE DEPUIS UN VÉHICULE SPATIAL ANIME D'UNE FORCE DE PROPULSION CONTINUE**
VERFAHREN ZUM AUSSTOSSEN EINER NUTZLAST VON EINEM MIT KONTINUIERLICHER ANTRIEBSKRAFT ANGETRIEBENEN RAUMFAHRZEUG
METHOD FOR EJECTING A PAYLOAD FROM A SPACECRAFT DRIVEN BY A CONTINUOUS PROPULSION FORCE

(30) Priorité: 16.01.2018 FR 1850356
(43) Date de publication de la demande: 14.10.2020
(73) Titulaire: ArianeGroup SAS, 75015 Paris (FR)
(72) Inventeur: QUINQUIS, Isabelle, 92500 Rueil Malmaison (FR); CHAVY, Siegfrid, 60240 Mont Javoult (FR); SANNINO, Jean-Michel, 27950 Saint Marcel (FR)
(74) Mandataire: Brevalex
(86) Numéro de dépôt international: PCT/FR2019/050059
(87) Numéro de publication internationale: WO 2019/141925

(56) Documents cités:
- FR-A1- 2 729 117
- US-A1- 2015 102 174
- US-B1- 6 827 313
- US-B1- 9 463 882

## Description

### DOMAINE TECHNIQUE

L'invention se rapporte au domaine des applications spatiales. Plus précisément, l'invention concerne l'éjection d'au moins une charge utile par un véhicule spatial tel qu'un lanceur ou un véhicule de desserte orbitale.

### ÉTAT DE LA TECHNIQUE ANTÉRIEURE

Plusieurs charges utiles, en pratique des satellites, peuvent être placées en orbite par un véhicule spatial qui est propulsé par intermittence. Ces phases de propulsion par intermittence sont spécifiques à l'éjection de chaque charge utile, pour empêcher la collision des charges utiles entre elles ou avec le véhicule spatial.

Ces phases de propulsion par intermittence ont tendance à augmenter la consommation de matière propulsive, notamment du fait du rallumage des moteurs et de la dispersion d'ergol dans au moins un réservoir lors des phases balistiques qui ont lieu entre les phases de propulsion.

Par ailleurs, ces phases de propulsion par intermittence rendent la trajectoire du véhicule spatial et des satellites complexe à prévoir et à mettre en œuvre. Ces phases de propulsion par intermittence augmentent aussi le nombre de cycles d'activation, fonctionnement et désactivation des systèmes bord.

Aussi existe-il un besoin d'éjecter des charges utiles sur orbite, en empêchant les collisions des charges utiles entre elles ou avec le véhicule spatial, tout en limitant la consommation de matière propulsive et, si possible, la complexité des trajectoires des charges utiles et du véhicule spatial.

Les documents FR 2 729 117, US 6 827 313, US 2015/102174 et US 9,463,882 divulguent chacun un procédé d'éjection d'au moins une charge utile qui est connue de l'état de la technique.

### EXPOSÉ DE L'INVENTION

L'invention vise à résoudre au moins partiellement les problèmes rencontrés dans les solutions de l'art antérieur.

A cet égard, l'invention a pour objet un procédé d'éjection d'au moins une charge utile telle qu'un satellite. Selon l'invention, le procédé d'éjection comprend une étape d'éjection de la charge utile depuis un véhicule spatial qui est animé d'une force de propulsion continue lors de l'éjection de la charge utile.

Le procédé d'éjection selon l'invention permet d'éjecter au moins une charge utile sur orbite, en empêchant les collisions de l'au moins une charge utile avec d'autres satellites ou avec le véhicule spatial, tout en limitant la consommation de matière propulsive. Avantageusement, le procédé d'éjection limite la complexité de la trajectoire de la charge utile et celle du véhicule spatial.

En particulier, la consommation de matière propulsive est réduite du fait de la limitation du nombre de cycles d'allumage et d'extinction des moyens de propulsion du véhicule spatial.

Le véhicule spatial est animé par la force de propulsion continue par rapport au corps céleste autour duquel il est en orbite, en plus de force de gravité.

La force de propulsion est continue au moins lors de l'éjection de la charge utile. Par conséquent, le véhicule spatial est animé de la force de propulsion continue par rapport à la charge utile immédiatement après l'éjection, ce qui tend à éloigner la trajectoire du véhicule spatial de celle de cette charge utile et à éviter les collisions.

L'invention peut comporter de manière facultative une ou plusieurs des caractéristiques suivantes combinées entre elles ou non.

De préférence, l'étape d'éjection comprend un ordre d'éjection de la charge utile et l'éjection physiquement de l'au moins une charge utile du véhicule spatial suite à l'ordre d'éjection.

Selon une particularité de réalisation, le procédé d'éjection comprend l'éjection de plusieurs charges utiles depuis le véhicule spatial au cours du vol du véhicule spatial.

Selon une particularité de réalisation, l'étape d'éjection comprend l'éjection d'au moins un premier groupe de charges utiles comprenant au moins une charge utile, et/ou l'éjection d'au moins un deuxième groupe de charges utiles comprenant au moins une charge utile.

Le procédé d'éjection permet d'éjecter plusieurs charges utiles sur orbite, en empêchant la collision des charges utiles entre elles et avec le véhicule spatial, tout en limitant la consommation de matière propulsive.

Selon une particularité de réalisation, les charges utiles du premier groupe sont éjectées simultanément du véhicule spatial.

Selon une particularité de réalisation, les charges utiles du deuxième groupe sont éjectées simultanément du véhicule spatial.

De préférence, l'étape d'éjection comprend un ordre d'éjection simultané des charges utiles du premier groupe et l'éjection physiquement des charges utiles du premier groupe du véhicule spatial suite à l'ordre d'éjection.

De préférence, l'étape d'éjection comprend un ordre d'éjection simultané des charges utiles du deuxième groupe et l'éjection physiquement des charges utiles du deuxième groupe du véhicule spatial suite à l'ordre d'éjection.

L'éjection de charges utiles simultanément permet de limiter plus facilement les modifications de la trajectoire du véhicule spatial provoquées par l'éjection des charges utiles.

De manière générale, les charges utiles d'un groupe sont éjectées simultanément ou bien à des intervalles qui sont chacun très inférieurs à celui entre l'instant d'éjection de charges utiles d'un groupe et celui d'éjection de charges utiles d'un autre groupe.

Selon une particularité de réalisation, les charges utiles du premier groupe et/ou celles du deuxième groupe sont éjectées dans des directions qui sont équiréparties autour de l'axe longitudinal du véhicule spatial, notamment si les charges utiles sont identiques.

Selon une particularité de réalisation, les charges utiles du premier groupe et/ou celles du deuxième groupe sont éjectées orthogonalement à l'axe longitudinal du véhicule spatial.

Selon une particularité de réalisation, l'étape d'éjection comprend l'éjection de deux charges utiles selon une direction orthogonale à l'axe longitudinal du véhicule spatial et dans des sens opposés.

Selon une particularité de réalisation, le procédé d'éjection comprend une étape d'orientation de l'axe longitudinal du véhicule spatial relativement au plan orbital, avant l'éjection d'au moins une charge utile.

Selon une particularité de réalisation, une étape de rotation du véhicule spatial autour de son axe longitudinal pour orienter l'au moins une charge utile en rotation relativement au plan orbital avant son éjection.

Selon une particularité de réalisation, le procédé d'éjection comprend l'éjection d'au moins deux charges utiles avec des orientations identiques sur leur orbite.

Selon une particularité de réalisation, l'angle entre la force de propulsion continue du véhicule spatial et la vitesse orbitale du véhicule spatial lors de l'éjection est non nul.

Selon une particularité de réalisation, la force de propulsion continue est orientée selon un axe longitudinal du véhicule spatial lors de l'éjection.

Selon une particularité de réalisation, la force de propulsion continue du véhicule spatial est orientée dans le sens de la vitesse orbitale lors de l'éjection.

Dans ce cas, la force de propulsion continue tend à augmenter l'orbite du véhicule spatial, par exemple avant l'éjection d'une charge utile.

Selon une autre particularité de réalisation, la force de propulsion continue est orientée dans un sens opposé à la vitesse orbitale lors de l'éjection.

Dans ce cas, la force de propulsion continue tend à diminuer l'orbite du véhicule spatial, par exemple avant l'éjection d'une charge utile.

Selon une particularité de réalisation, le procédé d'éjection comprend une étape de propulsion principale pour acheminer le véhicule spatial sur une orbite avant l'étape d'éjection, l'intensité de la propulsion continue étant strictement inférieure à l'intensité de la force de propulsion principale.

Selon une particularité de réalisation, le rapport de l'intensité de la propulsion continue sur l'intensité de la force de propulsion principale est compris entre 5*10⁻⁴ et 5*10⁻³, de préférence entre 3,84 * 10⁻⁴ et /ou 3,84*10⁻³.

Selon une particularité de réalisation, le rapport de la durée de la force de propulsion principale sur la durée de la propulsion continue est compris entre 0.05 et 1, de préférence entre 0,05 et 0,6.

Selon une particularité de réalisation, le véhicule spatial est propulsé par au moins un ergol qui est stocké sous forme pulvérente ou liquide dans un réservoir.

L'accélération permanente résultant de la force de propulsion continue tend à maintenir l'ergol au fond de son réservoir, et donc de limiter ses déplacements et son réchauffement au contact des parois du réservoir. La consommation de matière propulsive est alors d'autant plus réduite lors de la mise en œuvre du procédé d'éjection, en particulier si la propulsion principale est redémarrée ultérieurement.

Selon une particularité de réalisation, le véhicule spatial est animé d'une force de propulsion continue entre l'étape d'éjection du premier groupe de charges utiles et l'étape d'éjection du deuxième groupe de charges utiles.

Selon une particularité de réalisation, le véhicule spatial est animé d'une force de propulsion continue depuis l'étape d'éjection du premier groupe de charge utile au moins jusqu'à l'étape d'éjection du deuxième groupe de charges utiles.

Selon une particularité de réalisation, le véhicule spatial est animé d'une force de propulsion continue depuis l'arrêt de la force de propulsion principale au moins jusqu'à ce que la charge utile ou toutes les charges utiles soient éjectées du véhicule spatial.

Le véhicule spatial est alors toujours animé par une force de propulsion jusqu'à ce que la charge utile ou toutes les charges utiles soient éjectées du véhicule spatial.

Selon une particularité de réalisation, le véhicule spatial est de nouveau animé de la force de propulsion principale, lorsque la charge utile ou toutes les charges utiles ont été éjectées du véhicule spatial.

### BRÈVE DESCRIPTION DES DESSINS

La présente invention sera mieux comprise à la lecture de la description d'exemples de réalisation, donnés à titre purement indicatif et nullement limitatif, en faisant référence aux dessins annexés sur lesquels :
- les figures 1 à 5 illustrent schématiquement l'éjection d'un groupe de satellites par un véhicule spatial, selon un procédé d'éjection selon un premier mode de réalisation de l'invention ;
- la figure 6 illustre schématiquement l'éjection de groupes de satellites par un véhicule spatial, selon un procédé d'éjection selon un deuxième mode de réalisation de l'invention ;
- la figure 7 représente schématiquement sous forme d'organigramme le procédé d'éjection selon le premier mode de réalisation ou le deuxième mode de réalisation.

### EXPOSÉ DÉTAILLÉ DE MODES DE RÉALISATION PARTICULIERS

Des parties identiques, similaires ou équivalentes des différentes figures portent les mêmes références numériques de façon à faciliter le passage d'une figure à l'autre.

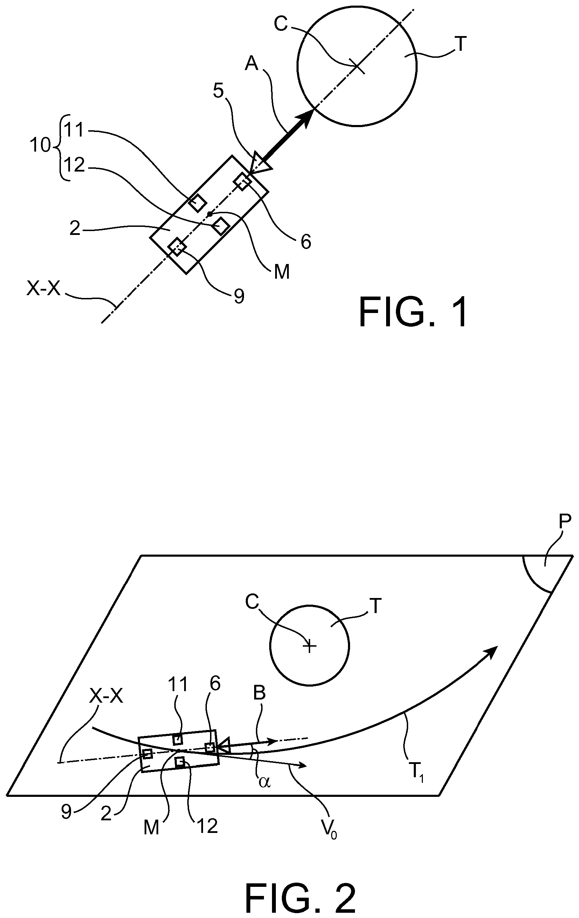

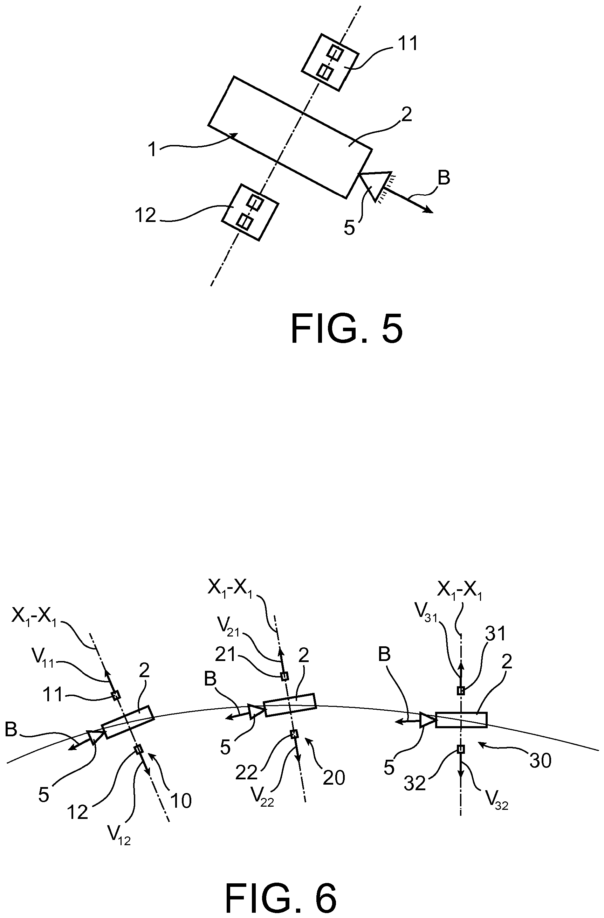

Les figures 1 à 5 illustrent les étapes d'un procédé d'éjection 100 d'un premier groupe 10 de satellites par un véhicule spatial 1, selon un premier mode de réalisation.

Le véhicule spatial 1 est par exemple un lanceur ou bien un véhicule de desserte orbitale. Il peut être réutilisable ou non. Il est configuré pour embarquer une ou plusieurs charges utiles telles que des satellites, des véhicules orbitaux, des sondes spatiales, des kits de service orbitaux, etc. Dans le premier mode de réalisation, il embarque deux satellites 11, 12 qui forment un premier groupe 10 de satellites. Ces satellites 11, 12 sont par exemple des corps inertes, c'est-à-dire qu'ils sont dépourvus de moyens de propulsion.

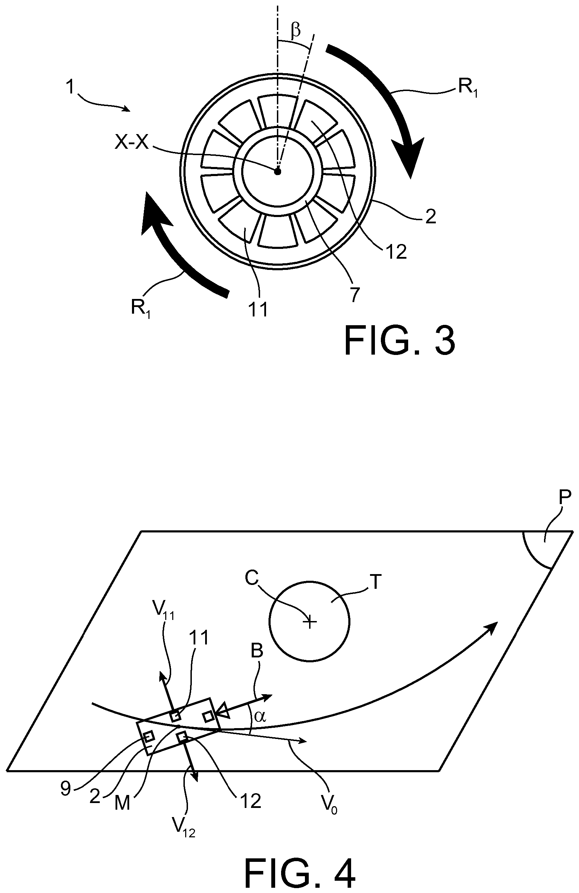

Le véhicule spatial 1 comprend un corps 2, des moyens de propulsion 5, au moins un réservoir 6, des moyens 7 d'éjection de satellite qui sont visibles à la figure 3, et un système de régulation numérique 9.

Le corps 2 du véhicule spatial s'étend autour d'un axe longitudinal X-X du véhicule spatial. Il comprend le centre de masse M du véhicule spatial qui est animé d'une vitesse orbitale V₀ par rapport à un corps céleste, en particulier la terre T, lorsque le véhicule spatial s'apprête à éjecter au moins un des satellites 11, 12 embarqué.

Les moyens de propulsion 5 comprennent au moins un propulseur. Ils sont configurés pour donner une force de propulsion principale A et/ou une force de propulsion continue B au véhicule spatial 1 par rapport au corps céleste T.

Le réservoir 6 contient au moins un ergol qui est forme liquide, ou sous forme solide et en particulier sous forme de poudre. L'ergol sert de matière propulsive pour propulser le véhicule spatial. Il est par exemple mélangé à d'autres ergols qui sont entreposés dans d'autres réservoirs 6 du véhicule spatial, pour propulser le véhicule spatial 1.

Les moyens 7 d'éjection de satellites comprennent par exemple des ressorts. Ces ressorts forment des moyens élastiques qui sont chacun configurés pour éjecter un des satellites 11, 12 relativement au corps 2 du véhicule spatial. Les moyens 7 d'éjection de satellite sont notamment configurés pour éjecter simultanément les satellites 11, 12 du groupe 10 de satellites.

Le système de régulation numérique 9 comprend au moins un calculateur. La trajectoire du véhicule spatial 1 est notamment enregistrée dans le système de régulation numérique 9 avant le vol. Le système de régulation numérique 9 est configuré pour commander les moyens de propulsion 5 et éventuellement les moyens d'éjection 7 des satellites. Il forme notamment un système de commande du véhicule spatial 1, apte à commander la mise en œuvre d'un procédé d'éjection 100 de satellites 11, 12 tel que décrit ci-dessous.

Dans le premier mode de réalisation représenté, les satellites 10, 11 du premier groupe 10 sont identiques.

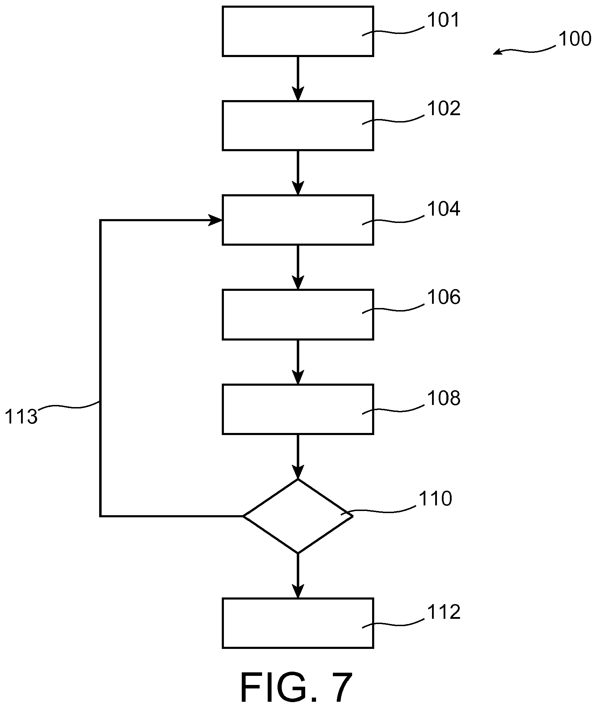

La figure 1 et la figure 7 représentent une étape de propulsion principale 101. L'étape de propulsion principale 101 comprend la propulsion du véhicule spatial 1, par une force de propulsion principale A. Les satellites 11, 12 sont embarqués par le véhicule spatial 1. Cette force de propulsion principale A est créée par combustion d'ergols qui sont éjectés dans les moyens de propulsion 5. Elle est orientée selon l'axe longitudinal X-X du véhicule spatial 1.

L'étape de propulsion principale 101 sert à acheminer le véhicule spatial 1 en orbite autour du corps céleste T autour duquel les satellites 11, 12 sont destinés à graviter. Elle sert notamment à éloigner le véhicule spatial de la terre T, avec une force de propulsion principale A de grande intensité pour échapper à la gravité terrestre.

La figure 2 et la figure 7 représentent une étape 102 d'arrêt de la propulsion principale A et de démarrage de la propulsion continue B, ainsi qu'une étape 104 d'orientation de l'axe longitudinal X-X du véhicule spatial par rapport au plan orbital P du véhicule spatial 1.

La force de propulsion principale A du véhicule spatial 1 est remplacée par une force de propulsion continue B. La force de propulsion continue B est exercée sur le véhicule spatial 1 par rapport au corps céleste T, en plus de la force de gravité exercée par le corps céleste T. La force de propulsion continue B est orientée selon l'axe longitudinal X-X du véhicule spatial.

Le véhicule spatial est animé d'une vitesse orbitale V0 par rapport au corps céleste T. Il suit une trajectoire T1 dans le plan orbital P autour du corps céleste T. La force de propulsion continue B tend à modifier la trajectoire T1 du véhicule spatial 1 par rapport au corps céleste T. Elle tend éventuellement à modifier le plan orbital P.

L'intensité de la force de propulsion continue B est strictement inférieure à celle de la force de propulsion principale A. Le rapport de l'intensité de la force de propulsion continue B sur l'intensité de la force de propulsion principale A est par exemple compris entre 5*10⁻⁴ et 5*10⁻³, notamment entre 3,84 * 10⁻⁴ et /ou 3,84*10⁻³.

La durée de la propulsion principale A est généralement inférieure à celle de la propulsion continue B, notamment lorsque plusieurs groupes de satellites sont éjectés. Le rapport de la durée de la force de propulsion principale A sur la durée de la force de propulsion continue B au cours du vol du véhicule spatial est par exemple compris entre 0.05 et 1, de préférence entre 0,05 et 0,6.

L'étape d'orientation 104 comprend la modification de l'orientation de l'axe longitudinal X-X du véhicule spatial 1 relativement au plan orbital P, avant l'éjection d'au moins un satellite 11, 12.

Dans le premier mode de réalisation, elle tend à ce que la force de propulsion continue B du véhicule spatial 1 présente un angle α non nul avec la vitesse orbitale V0 du véhicule spatial. L'angle α entre la force de propulsion continue et la vitesse orbitale V0 est par exemple compris entre 5° et 45°.

Dans le premier mode de réalisation, la force de propulsion continue B est orientée dans le sens de la vitesse orbitale V0 du véhicule spatial 1.

La figure 3 et la figure 7 représentent une étape de rotation 106 du véhicule spatial 1 autour de son axe longitudinal X-X. Le véhicule spatial 1 tourne d'un angle β non nul autour de son axe longitudinal X-X selon le sens de rotation R1. L'étape de rotation 106 sert à orienter les satellites 11, 12 en rotation relativement au plan orbital P avant leur éjection du corps 2 par les moyens d'éjection 7.

La figure 3, la figure 5 et la figure 7 représentent une étape d'éjection 108 du premier groupe 11 de satellite 11, 12 depuis le véhicule spatial 1 qui est animé de la force de propulsion continue B lors de l'éjection des satellites 11, 12.

Le véhicule spatial 1 est alors animé de la force de propulsion continue B par rapport aux satellites 11, 12 après leur éjection, ce qui tend à éloigner la trajectoire du véhicule spatial 1 de celle des satellites 11, 12 et à éviter les collisions.

Le premier satellite 11 et le deuxième satellite 12 sont éjectés en sens opposé selon une direction X1-X1 qui est orthogonale à l'axe longitudinal X-X du véhicule spatial. Les satellites 11, 12 sont alors éjectés de manière équirépartie autour de l'axe longitudinal X-X du véhicule spatial 1.

Le premier satellite 11 est éjecté du véhicule spatial 1 avec une vitesse V11 relativement au véhicule spatial 1. Le deuxième satellite 12 est éjecté du véhicule spatial 1 avec une vitesse V12 relativement au véhicule spatial 1. Ils sont éjectés simultanément du véhicule spatial 1 par les moyens d'éjection 7. Ils entrent alors en orbite autour du corps céleste T.

Une fois que le premier satellite 11 et le deuxième satellite 12 ont été éjectés, la propulsion continue B est arrêtée et la propulsion principale A est remise en marche à une étape 112. Le véhicule spatial 1 est alors éloigné définitivement des trajectoires des satellites 11, 12. Le véhicule spatial 1 retourne par exemple dans l'atmosphère terrestre ou bien il échappe définitivement à l'attraction gravitationnelle terrestre.

Plus généralement, l'étape d'éjection 108 comprend un ordre d'éjection simultané des satellites 11, 12 du groupe 10 de satellites par le système de régulation numérique 9, et l'éjection physique des satellites 11, 12 du véhicule spatial 1 par les moyens 7 d'éjection suite à cet ordre et éventuellement avec un léger retard.

Le procédé d'éjection 100 selon le deuxième mode de réalisation se distingue de celui du premier mode de réalisation par le nombre de satellites qui sont éjectés. Dans ce mode de réalisation, trois groupes 10, 20, 30 de satellites sont éjectés successivement du véhicule spatial 1 autour du corps céleste T sans interruption de la propulsion continue B entre l'éjection des différents groupes.

Chacun des groupes 10, 20, 30 de satellites comporte deux satellites 11, 12, 21, 22, 31, 32. Les satellites 11, 12 au sein du premier groupe 10 sont notamment identiques entre eux. Les satellites 21, 22 au sein du deuxième groupe 20 sont notamment identiques entre eux. Les satellites 31, 32 au sein du troisième groupe 30 sont notamment identiques entre eux.

L'étape de propulsion principale 101 est similaire à celle du premier mode de réalisation. L'étape 102 d'arrêt de la propulsion principale A et de démarrage de la propulsion continue B est similaire à celle du premier mode de réalisation. Ces étapes 101, 102 ont lieu une fois au cours du vol avant l'étape d'éjection 108 du premier groupe 10 de satellites.

L'étape 104 d'orientation de l'axe longitudinal X-X du véhicule spatial par rapport au plan orbital P du véhicule spatial 1 et/ou l'étape de rotation 106 du véhicule spatial 1 autour de son axe longitudinal X-X sont facultatives pour le deuxième groupe 20 de satellites et/ou pour le troisième groupe 30 de satellites.

L'étape d'éjection 108 a lieu pour le deuxième groupe 20 de satellites et pour le troisième groupe 30 de satellites, c'est-à-dire pour chaque groupe 10, 20, 30 de satellites embarqué par le véhicule spatial. L'étape d'éjection 108 comprend un ordre d'éjection simultanée des satellites 11, 12, 21, 22, 31, 32 au sein d'un groupe, et l'éjection des satellites 11, 12, 21, 22, 31, 32 éventuellement avec un léger retard suite à cet ordre.

L'étape 112 d'allumage de la propulsion principale A est similaire à celle du premier mode de réalisation. Elle a lieu une fois que tous les satellites 11, 12, 21, 22, 31, 32 ont été éjectés.

Le procédé d'éjection 100 selon le deuxième mode de réalisation est décrit plus en détail ci-dessous, à partir de l'étape d'éjection 108 du premier groupe 10 de satellites.

Dans le deuxième mode de réalisation, l'étape d'éjection 108 comprend l'éjection d'au moins un premier groupe 10 de deux satellites 11, 12. Ces deux satellites 11, 12 sont éjectés selon une direction X1-X1 orthogonale à l'axe longitudinal X-X du véhicule spatial et dans des sens opposés. Les satellites 11, 12 du premier groupe sont éjectés simultanément du véhicule spatial 1.

Le procédé d'éjection 100 se poursuit à l'étape 110 par la vérification de la présence de satellites 21, 22, 31, 32 embarqués par le véhicule spatial 1.

L'étape d'éjection 108 est réitérée selon la flèche 113 pour l'éjection du deuxième groupe 20 de satellites, et éventuellement les étapes 104, 106 au préalable pour ce groupe de satellites.

L'étape 104 d'orientation de l'axe longitudinal X-X du véhicule spatial par rapport au plan orbital P du véhicule spatial 1 est répétée pour le deuxième groupe 20 de satellites si nécessaire. L'étape de rotation 106 du véhicule spatial 1 autour de son axe longitudinal X-X est répétée pour le deuxième groupe 20 de satellites si nécessaire.

Le procédé d'éjection 100 comprend ensuite l'éjection du deuxième groupe 20 de deux satellites 21, 22. Ces deux satellites 21, 22 sont éjectés du véhicule spatial 1 selon la direction X1-X1 et dans des sens opposés. Les satellites 21, 22 du deuxième groupe sont éjectés simultanément du véhicule spatial 1.

Le procédé d'éjection 100 se poursuit à l'étape 110 par la vérification de la présence de satellites 31, 32 embarqués par le véhicule spatial 1. L'étape d'éjection 108 est réitérée selon la flèche 113 pour éjecter le troisième groupe 30 de satellites, et éventuellement les étapes 104, 106 au préalable pour ce groupe de satellites.

L'étape 104 d'orientation de l'axe longitudinal X-X du véhicule spatial par rapport au plan orbital P du véhicule spatial 1 est répétée pour le troisième groupe 30 de satellites si nécessaire. L'étape de rotation 106 du véhicule spatial 1 autour de son axe longitudinal X-X est répétée pour le troisième groupe 30 de satellites si nécessaire.

Le procédé d'éjection 100 comprend ensuite l'éjection du troisième groupe 30 de deux satellites 31, 32. Ces deux satellites 31, 32 sont éjectés du véhicule spatial 1 selon la direction X1-X1 et dans des sens opposés. Les satellites 31, 32 du troisième groupe sont éjectés simultanément du véhicule spatial 1.

Les trois satellites 11, 21, 31 ont été éjectés en orbite avec des orientations identiques. Les trois satellites 12, 22, 32 ont été éjectés en orbite avec des orientations identiques.

Dans le deuxième mode de réalisation, le véhicule spatial 1 est animé d'une force de propulsion continue B depuis l'étape d'éjection 108 du premier groupe 10 de satellite jusqu'à l'étape d'éjection 108 du troisième groupe 30 de satellites.

La force de propulsion principale A reprend à l'étape 112, lorsque tous les satellites 11, 12, 21, 22, 31, 32 ont été éjectés du véhicule spatial 1.

Dans le premier mode de réalisation et dans le deuxième mode de réalisation, le véhicule spatial 1 est animé par la force de propulsion continue B depuis l'arrêt de la force de propulsion principale A au moins jusqu'à ce que tous les satellites 11, 12, 21, 22, 31, 32 soient éjectés du véhicule spatial 1. La force de propulsion continue B a notamment une valeur constante durant cette période.

De manière générale, le véhicule spatial 1 est animé d'une force de propulsion continue B au moins à l'éjection d'au moins un satellite 11, 12, 21, 22, 31, 32, c'est-à-dire peu avant et peu après l'éjection de ce satellite 11, 12, 21, 22, 31, 32.

En particulier, la consommation de matière propulsive est réduite lors du procédé d'éjection 100, du fait de la limitation du nombre de cycles d'allumage et d'extinction des moyens de propulsion 5 du véhicule spatial 1.

Par ailleurs, du fait de la force de propulsion continue B du véhicule spatial 1, chaque ergol est maintenu au fond de son réservoir 6, ce qui évite sa dispersion et son réchauffement dans son réservoir 6. La consommation de matière propulsive lors du procédé d'éjection 100 est alors davantage limitée, en particulier si la propulsion principale A est redémarrée.

Le procédé d'éjection 100 permet ainsi d'éjecter au moins un satellite 11, 12, 21, 22, 31, 32 en orbite, en empêchant les collisions et en limitant la consommation de matière propulsive.

Le procédé d'éjection 100 tend aussi à limiter la complexité de la trajectoire du satellite 11, 12, 21, 22, 31, 32 et de celle du véhicule spatial 1.

Bien entendu, diverses modifications peuvent être apportées par l'homme du métier à l'invention qui vient d'être décrite sans sortir du cadre de l'exposé de l'invention.

En variante, les moyens de propulsion 5 comprennent au moins un propulseur principal pour la propulsion principale du véhicule spatial 1, et un au moins un propulseur secondaire pour la propulsion continue du véhicule spatial 1 lors des phases d'éjection des satellites. Dans ce cas, chaque propulseur secondaire est de puissance plus faible que celle de chaque propulseur principal.

En variante, l'ergol peut être remplacé par un gaz qui sert de matière propulsive au véhicule spatial 1.

En variante, le système de régulation numérique 9 est configuré pour calculer en vol, notamment en temps réel, la trajectoire du véhicule spatial 1 et l'instant d'éjection d'au moins un satellite 11, 12, par exemple pour corriger la trajectoire du véhicule spatial 1 en cas d'événement imprévu.

Les satellites 10, 11, 21, 22, 31, 32 peuvent être identiques ou non. En particulier, leur masse et leur fonction peuvent varier.

Le nombre de satellites 11, 12 embarqués par le véhicule spatial 1 peut varier. Par exemple, le véhicule spatial 1 peut décoller avec un seul satellite 11. Par ailleurs, le nombre de satellites 11, 12, 21, 22, 31, 32 de chaque groupe 10, 20, 30 peut varier.

Les satellites 11, 12, 21, 22, 31, 32 peuvent être éjectés avec des orientations variables, qui sont éventuellement différentes entre elles.

Les instants d'arrêt de la propulsion principale A et de début de la propulsion continue B peuvent varier. En particulier, la propulsion continue B peut remplacer la propulsion principale A au moins un certain temps avant que le véhicule spatial 1 arrive à l'orbite d'éjection du premier groupe 10 de satellites. Par ailleurs, l'instant de démarrage de la propulsion continue B peut avoir lieu un certain temps après l'arrêt de la propulsion principale A.

En variante, le véhicule spatial 1 est dépourvu de force de propulsion principale A ou continue B une fois que tous les satellites 11, 12 ont été éjectés.

En variante, la force de propulsion B est orientée dans la même direction que la vitesse orbitale V0.

En variante, la force de propulsion continue B est inclinée par rapport au plan orbital P, notamment lorsque l'axe longitudinal X-X est incliné par rapport au plan orbital P du véhicule spatial 1 lors du démarrage de la force de propulsion continue B.

En variante ou en plus, la force de propulsion continue B est orientée dans un sens opposé à la vitesse orbitale V0 lors de l'éjection d'au moins un des satellites 11, 12, 21, 22, 31, 32.

## Revendications

1. Procédé d'éjection (100) d'au moins une charge utile telle qu'un satellite (11, 12), comprenant une étape d'éjection (108) de la charge utile (11, 12) depuis un véhicule spatial (1) qui est animé d'une force de propulsion continue (B) lors de l'éjection de la charge utile (11, 12).

2. Procédé d'éjection (100) d'au moins une charge utile (11, 12) selon la revendication 1, comprenant l'éjection de plusieurs charges utiles (11, 12) depuis le véhicule spatial (1) au cours du vol du véhicule spatial (1),
l'étape d'éjection (108) comprenant l'éjection d'au moins un premier groupe (10) de charges utiles (11, 12) comprenant au moins une charge utile (11), et/ou l'éjection d'au moins un deuxième groupe (20) de charges utiles (21, 22) comprenant au moins une charge utile (21, 22).

3. Procédé d'éjection (100) selon la revendication 2, dans lequel les charges utiles (11, 12) du premier groupe sont éjectées simultanément du véhicule spatial (1) et/ou dans lequel les charges utiles (21, 22) du deuxième groupe sont éjectées simultanément du véhicule spatial (1),
l'étape d'éjection (108) du premier groupe (10) comprenant de préférence un ordre d'éjection simultanée des charges utiles (11, 12) du premier groupe et l'éjection physiquement des charges utiles (11, 12) du premier groupe du véhicule spatial (1) suite à l'ordre d'éjection,
l'étape d'éjection (108) du deuxième groupe (20) comprenant de préférence un ordre d'éjection simultanée des charges utiles (21, 22) du deuxième groupe et l'éjection physiquement des charges utiles (21, 22) du deuxième groupe du véhicule spatial (1) suite à l'ordre d'éjection,
les charges utiles (11, 12) du premier groupe sont de préférence éjectées dans des directions qui sont équiréparties autour de l'axe longitudinal (X-X) du véhicule spatial lorsque les charges utiles (11, 12) sont identiques, et/ou les charges utiles (21, 22) du deuxième groupe sont de préférence éjectées dans des directions qui sont équiréparties autour de l'axe longitudinal (X-X) du véhicule spatial lorsque les charges utiles (21, 22) sont identiques,
les charges utiles (11, 12) du premier groupe et/ou celles (21, 22) du deuxième groupe sont de préférence éjectées orthogonalement à l'axe longitudinal (X-X) du véhicule spatial.

4. Procédé d'éjection (100) selon la revendication 3, dans lequel l'étape d'éjection (108) comprend l'éjection de deux charges utiles (11, 12) selon une direction (X1-X1) orthogonale à l'axe longitudinal (X-X) du véhicule spatial et dans des sens opposés.

5. Procédé d'éjection (100) selon l'une quelconque des revendications 1 à 4, comprenant une étape d'orientation (104) de l'axe longitudinal (X-X) du véhicule spatial relativement au plan orbital (P), avant l'éjection de l'au moins une charge utile (11, 12), et/ou
une étape de rotation (106) du véhicule spatial (1) autour de son axe longitudinal (X-X) pour orienter l'au moins une charge utile (11, 12) en rotation relativement au plan orbital (P) avant son éjection.

6. Procédé d'éjection (100) selon l'une quelconque des revendications 1 à 5, comprenant l'éjection d'au moins deux charges utiles (11, 12) avec des orientations identiques sur leur orbite.

7. Procédé d'éjection (100) selon l'une quelconque des revendications 1 à 6, comprenant un angle (α) non nul entre la force de propulsion continue (B) du véhicule spatial (1) et la vitesse orbitale (V0) du véhicule spatial lors de l'éjection, et/ou dans lequel
la force de propulsion continue (B) est orientée selon un axe longitudinal (X-X) du véhicule spatial lors de l'éjection.

8. Procédé d'éjection (100) d'au moins une charge utile selon l'une quelconque des revendications 1 à 7, dans lequel la force de propulsion continue (B) du véhicule spatial (1) est orientée dans le sens de la vitesse orbitale (V0) lors de l'éjection, ou dans lequel
la force de propulsion continue (B) est orientée dans un sens opposé à la vitesse orbitale (V0) lors de l'éjection.

9. Procédé d'éjection (100) selon l'une quelconque des revendications 1 à 8, comprenant une étape de propulsion principale (101) pour acheminer le véhicule spatial (1) sur une orbite avant l'étape d'éjection (108), l'intensité de la force de propulsion continue (B) étant strictement inférieure à l'intensité de la force de propulsion principale (A).

10. Procédé d'éjection (100) selon la revendication 9, dans lequel le rapport de l'intensité de la force de propulsion continue (B) sur l'intensité de la force de propulsion principale (A) est compris entre 5*10⁻⁴ et 5*10⁻³, de préférence entre 3,84 * 10⁻⁴ et /ou 3,84* 10⁻³,
le rapport de la durée de la force de propulsion principale (A) sur la durée de la force de propulsion continue (B) est compris entre 0.05 et 1, de préférence entre 0,05 et 0,6.

11. Procédé d'éjection (100) selon l'une quelconque des revendications 1 à 10, dans lequel le véhicule spatial (1) est propulsé par au moins un ergol qui est stocké sous forme pulvérente ou liquide dans un réservoir (6).

12. Procédé d'éjection (100) selon l'une quelconque des revendications 1 à 11 combinée à la revendication 2, dans lequel le véhicule spatial (1) est animé d'une force de propulsion continue (B) entre l'étape d'éjection (108) du premier groupe (10) de charges utiles et l'étape d'éjection (108) du deuxième groupe (20) de charges utiles.

13. Procédé d'éjection (100) selon l'une quelconque des revendications 1 à 12 combinée à la revendication 2, dans lequel le véhicule spatial (1) est animé d'une force de propulsion continue (B) depuis l'étape d'éjection (108) du premier groupe (10) de charge utile au moins jusqu'à l'étape d'éjection (108) du deuxième groupe (20) de charges utiles.

14. Procédé d'éjection (100) selon l'une quelconque des revendications 1 à 13 combinée à la revendication 9, dans lequel le véhicule spatial (1) est animé d'une force de propulsion continue (B) depuis l'arrêt de la force de propulsion principale (A) au moins jusqu'à ce que la charge utile ou toutes les charges utiles (11, 12, 21, 22, 31, 32) soient éjectées du véhicule spatial (1).

15. Procédé d'éjection (100) selon l'une quelconque des revendications 1 à 14 combinée à la revendication 9, dans lequel le véhicule spatial (1) est à nouveau animé de la force de propulsion principale (A), lorsque la charge utile ou toutes les charges utiles (11, 12, 21, 22, 31, 32) ont été éjectées du véhicule spatial (1).

## Patentansprüche

1. Verfahren zum Ausstoßen (100) zumindest einer Nutzlast, wie etwa eines Satelliten (11, 12), umfassend einen Schritt des Ausstoßens (108) der Nutzlast (11, 12) aus einem Raumfahrzeug (1), das beim Ausstoßen der Nutzlast (11, 12) mit einer Dauerantriebskraft (B) betrieben wird.

2. Verfahren zum Ausstoßen (100) zumindest einer Nutzlast (11, 12) nach Anspruch 1, umfassend das Ausstoßen mehrerer Nutzlasten (11, 12) aus dem Raumfahrzeug (1) während des Fluges des Raumfahrzeugs (1),
wobei der Schritt des Ausstoßens (108) das Ausstoßen von zumindest einer ersten Gruppe (10) von Nutzlasten (11, 12), die zumindest eine Nutzlast (11) enthält, und/oder das Ausstoßen von zumindest einer zweiten Gruppe (20) von Nutzlasten (21, 22), die zumindest eine Nutzlast (21, 22) enthält, umfasst.

3. Ausstoßverfahren (100) nach Anspruch 2, wobei die Nutzlasten (11, 12) der ersten Gruppe gleichzeitig aus dem Raumfahrzeug (1) ausgestoßen werden und/oder die Nutzlasten (21, 22) der zweiten Gruppe gleichzeitig aus dem Raumfahrzeug (1) ausgestoßen werden,
wobei der Schritt des Ausstoßens (108) der ersten Gruppe (10) vorzugsweise einen Befehl zum gleichzeitigen Ausstoßen der Nutzlasten (11, 12) der ersten Gruppe und das physische Ausstoßen der Nutzlasten (11, 12) der ersten Gruppe aus dem Raumfahrzeug (1) im Anschluss an den Ausstoßbefehl umfasst,
wobei der Schritt des Ausstoßens (108) der zweiten Gruppe (20) vorzugsweise einen Befehl zum gleichzeitigen Ausstoßen der Nutzlasten (21, 22) der zweiten Gruppe und das physische Ausstoßen der Nutzlasten (21, 22) der zweiten Gruppe aus dem Raumfahrzeug (1) im Anschluss an den Ausstoßbefehl umfasst,
wobei die Nutzlasten (11, 12) der ersten Gruppe vorzugsweise in Richtungen ausgestoßen werden, die um die Längsachse (X-X) des Raumfahrzeugs herum gleich beabstandet sind, wenn die Nutzlasten (11, 12) identisch sind, und/oder die Nutzlasten (21, 22) der zweiten Gruppe vorzugsweise in Richtungen ausgestoßen werden, die um die Längsachse (X-X) des Raumfahrzeugs herum gleich beabstandet sind, wenn die Nutzlasten (21, 22) identisch sind,
wobei die Nutzlasten (11, 12) der ersten Gruppe und/oder diejenigen (21, 22) der zweiten Gruppe vorzugsweise orthogonal zur Längsachse (X-X) des Raumfahrzeugs ausgestoßen werden.

4. Ausstoßverfahren (100) nach Anspruch 3, wobei der Schritt des Ausstoßens (108) das Ausstoßen von zwei Nutzlasten (11, 12) in einer Richtung (X1- X1) orthogonal zur Längsachse (X-X) des Raumfahrzeugs und in entgegengesetzten Richtungen umfasst.

5. Ausstoßverfahren (100) nach einem der Ansprüche 1 bis 4, umfassend einen Schritt des Ausrichtens (104) der Längsachse (X-X) des Raumfahrzeugs relativ zur Orbitalebene (P) vor dem Ausstoßen der zumindest einen Nutzlast (11, 12), und/oder
einen Schritt des Drehens (106) des Raumfahrzeugs (1) um seine Längsachse (X-X) herum, um die zumindest eine Nutzlast (11, 12) vor ihrem Ausstoß in Bezug auf die Orbitalebene (P) in Rotation zu versetzen.

6. Ausstoßverfahren (100) nach einem der Ansprüche 1 bis 5, umfassend das Ausstoßen von zumindest zwei Nutzlasten (11, 12) mit identischen Ausrichtungen auf ihrer Umlaufbahn.

7. Ausstoßverfahren (100) nach einem der Ansprüche 1 bis 6, umfassend einen von Null verschiedenen Winkel (α) zwischen der Dauerantriebskraft (B) des Raumfahrzeugs (1) und der Orbitalgeschwindigkeit (V0) des Raumfahrzeugs während des Ausstoßes, und/oder wobei die Dauerantriebskraft (B) während des Ausstoßes entlang einer Längsachse (X-X) des Raumfahrzeugs ausgerichtet ist.

8. Verfahren zum Ausstoßen (100) zumindest einer Nutzlast nach einem der Ansprüche 1 bis 7, wobei die Dauerantriebskraft (B) des Raumfahrzeugs (1) während des Ausstoßens in Richtung der Umlaufbahngeschwindigkeit (V0) ausgerichtet ist, oder wobei
die Dauerantriebskraft (B) während des Ausstoßens in eine Richtung gerichtet, die der Umlaufbahngeschwindigkeit (V0) entgegengesetzt ist.

9. Ausstoßverfahren (100) nach einem der Ansprüche 1 bis 8, umfassend einen Hauptantriebsschritt (101), um das Raumfahrzeug (1) vor dem Schritt des Ausstoßens (108) in eine Umlaufbahn zu bringen, wobei die Stärke der Dauerantriebskraft (B) strikt geringer als die Stärke der Hauptantriebskraft (A) ist.

10. Ausstoßverfahren (100) nach Anspruch 9, wobei das Verhältnis der Stärke der Dauerantriebskraft (B) zur Stärke der Hauptantriebskraft (A) zwischen 5*10⁻⁴ und 5*10⁻³, vorzugsweise zwischen 3,84*10⁻⁴ und/oder 3,84*10⁻³ liegt, wobei das Verhältnis der Zeitdauer der Hauptantriebskraft (A) zur Zeitdauer der Dauerantriebskraft (B) zwischen 0,05 und 1, vorzugsweise zwischen 0,05 und 0,6 liegt.

11. Ausstoßverfahren (100) nach einem der Ansprüche 1 bis 10, wobei das Raumfahrzeug (1) mit zumindest einem Treibstoff betrieben wird, der in pulverförmiger oder flüssiger Form in einem Tank (6) gespeichert ist.

12. Ausstoßverfahren (100) nach einem der Ansprüche 1 bis 11 in Kombination mit Anspruch 2, wobei das Raumfahrzeug (1) zwischen dem Schritt des Ausstoßens (108) der ersten Gruppe (10) von Nutzlasten und dem Schritt des Ausstoßens (108) der zweiten Gruppe (20) von Nutzlasten mit einer Dauerantriebskraft (B) betrieben wird.

13. Ausstoßverfahren (100) nach einem der Ansprüche 1 bis 12 in Kombination mit Anspruch 2, wobei das Raumfahrzeug (1) ab dem Schritt des Ausstoßens (108) der ersten Gruppe (10) von Nutzlasten zumindest bis zu dem Schritt des Ausstoßens (108) der zweiten Gruppe (20) von Nutzlasten mit einer Dauerantriebskraft (B) betrieben wird.

14. Ausstoßverfahren (100) nach einem der Ansprüche 1 bis 13 in Kombination mit Anspruch 9, wobei das Raumfahrzeug (1) ab dem Aussetzen der Hauptantriebskraft (A) zumindest so lange mit einer Dauerantriebskraft (B) betrieben wird, bis die Nutzlast bzw. alle Nutzlasten (11, 12, 21, 22, 31, 32) aus dem Raumfahrzeug (1) ausgestoßen sind.

15. Ausstoßverfahren (100) nach einem der Ansprüche 1 bis 14 in Kombination mit Anspruch 9, wobei das Raumfahrzeug (1) wieder mit der Hauptantriebskraft (A) betrieben wird, wenn die Nutzlast bzw. alle Nutzlasten (11, 12, 21, 22, 31, 32) aus dem Raumfahrzeug (1) ausgestoßen worden sind.

## Claims

1. Method for ejecting (100) at least one payload such as a satellite (11, 12), comprising a step of ejecting (108) the payload (11, 12) from a spacecraft (1) that is driven by a continuous propulsion force (B) when the payload is ejected (11, 12).

2. Method for ejecting (100) at least one payload (11, 12) according to claim 1, comprising the ejection of several payloads (11, 12) from the spacecraft (1) during the flight of the spacecraft (1),
the step of ejecting (108) comprising the ejection of at least one first group (10) of payloads (11, 12) comprising at least one payload (11), and/or the ejection of at least one second group (20) of payloads (21, 22) comprising at least one payload (21, 22).

3. Method for ejecting (100) according to claim 2, wherein the payloads (11, 12) of the first group are simultaneously ejected from the spacecraft (1) and/or wherein the payloads (21, 22) of the second group are simultaneously ejected from the spacecraft (1),
the step of ejecting (108) the first group (10) preferably comprising a simultaneous ejection order of the payloads (11, 12) of the first group and the ejecting physically of the payloads (11, 12) of the first group from the spacecraft (1) following the ejection order,
the step of ejecting (108) of the second group (20) preferably comprising a simultaneous ejection order of the payloads (21, 22) of the second group and the ejecting physically of the payloads (21, 22) of the second group from the spacecraft (1) following the ejection order,
the payloads (11, 12) of the first group are preferably ejected in directions which are equally distributed about the longitudinal axis (X-X) of the spacecraft when the payloads (11, 12) are identical, and/or the payloads (21, 22) of the second group are preferably ejected in directions which are equally distributed about the longitudinal axis (X-X) of the spacecraft when the payloads (21, 22) are identical,
the payloads (11, 12) of the first group and/or those (21, 22) of the second group are preferably ejected orthogonally to the longitudinal axis (X-X) of the spacecraft.

4. Method for ejecting (100) according to claim 3, wherein the step of ejecting (108) comprises the ejection of two payloads (11, 12) according to a direction (X1-X1) orthogonal to the longitudinal axis (X-X) of the spacecraft and in opposite directions.

5. Method for ejecting (100) according to any of claims 1 to 4, comprising a step of orienting (104) the longitudinal axis (X-X) of the spacecraft with respect to the orbital plane (P), before the ejection of the at least one payload (11, 12), and/or
a step of rotating (106) the spacecraft (1) about its longitudinal axis (X-X) in order to orient the at least one payload (11, 12) in rotation with respect to the orbital plane (P) before the ejection thereof.

6. Method for ejecting (100) according to any of claims 1 to 5, comprising the ejection of at least two payloads (11, 12) with identical orientations on their orbit.

7. Method for ejecting (100) according to any of claims 1 to 6, comprising a non-zero angle (α) between the continuous propulsion force (B) of the spacecraft (1) and the orbital speed (V0) of the spacecraft during the ejection, and/or wherein
the continuous propulsion force (B) is oriented according to a longitudinal axis (X-X) of the spacecraft during the ejection.

8. Method for ejecting (100) at least one payload according to any of claims 1 to 7, wherein the continuous propulsion force (B) of the spacecraft (1) is oriented in the direction of the orbital speed (V0) during the ejection, or wherein
the continuous propulsion force (B) is oriented in a direction opposite the orbital speed (V0) during the ejection.

9. Method for ejecting (100) according to any of claims 1 to 8, comprising a main propulsion step (101) to carry the spacecraft (1) on an orbit before the step of ejecting (108), the intensity of the continuous propulsion force (B) being strictly less than the intensity of the main propulsion force (A).

10. Method for ejecting (100) according to claim 9, wherein the ratio of the intensity of the continuous propulsion force (B) over the intensity of the main propulsion force (A) is comprised between 5*10⁻⁴ and 5*10⁻³, preferably between 3.84 * 10⁻⁴ and/or 3.84*10⁻³,
the ratio of the duration of the main propulsion force (A) over the duration of the continuous propulsion force (B) is comprised between 0.05 and 1, preferably between 0.05 and 0.6.

11. Method for ejecting (100) according to any of claims 1 to 10, wherein the spacecraft (1) is propelled by at least one propellant which is stored in powder or liquid form in a tank (6).

12. Method for ejecting (100) according to any of claims 1 to 11 combined with claim 2, wherein the spacecraft (1) is driven by a continuous propulsion force (B) between the step of ejecting (108) the first group (10) of payloads and the step of ejecting (108) the second group (20) of payloads.

13. Method for ejecting (100) according to any of claims 1 to 12 combined with claim 2, wherein the spacecraft (1) is driven by a continuous propulsion force (B) from the step of ejecting (108) the first group (10) of payloads at least to the step of ejecting (108) the second group (20) of payloads.

14. Method for ejecting (100) according to any of claims 1 to 13 combined with claim 9, wherein the spacecraft (1) is driven by a continuous propulsion force (B) from the stopping of the main propulsion force (A) at least until the payload or all the payloads (11, 12, 21, 22, 31, 32) are ejected from the spacecraft (1).

15. Method for ejecting (100) according to any of claims 1 to 14 combined with claim 9, wherein the spacecraft (1) is again driven by the main propulsion force (A), when the payload or all the payloads (11, 12, 21, 22, 31, 32) have been ejected from the spacecraft (1).
